# EUROPEAN PATENT SPECIFICATION

(11) **EP 1 682 610 B1**
(45) Date of publication and mention of the grant of the patent: **20.02.2013**
(21) Application number: 04767090.6
(22) Date of filing: 01.10.2004
(51) Int. Cl.: C08J 9/00, C08J 9/12, D21H 17/28, D21H 19/42

(54) **POROUS FILLER OR COATING PIGMENT OF PAPER AND CARDBOARD AND A METHOD OF MANUFACTURING IT**
PORÖSER FÜLLSTOFF ODER PORÖSES BESCHICHTUNGSPIGMENT FÜR PAPIER UND PAPPE UND HERSTELLUNGSVERFAHREN DAFÜR
CHARGE OU PIGMENT DE COUCHE POREUX DESTINES AU PAPIER OU AU CARTON BLANCHI ET LEUR PRODUCTION

(30) Priority: 02.10.2003 FI 20035172; 31.05.2004 FI 20040743
(43) Date of publication of application: 26.07.2006
(73) Proprietor: Teknologian tutkimuskeskus VTT, 02044 VTT (FI)
(72) Inventor: JOHANSSON, Allan, FI-00150 Helsinki (FI); QVINTUS-LEINO, Pia, FI-02210 Espoo (FI); VARJOS, Petri, FI-00420 Helsinki (FI); PELTONEN, Soili, FI-05200 Rajamäki (FI); MIKKONEN, Hannu, FI-05200 Rajamäki (FI); MIETTINEN, Mauno, FI-53600 Lappeenranta (FI); LUUKKAINEN, Saija, FI-83500 Outokumpu (FI)
(74) Representative: Sundman, Patrik Christoffer
(86) International application number: PCT/FI2004/000576
(87) International publication number: WO 2005/030847

(56) References cited:
- EP-A2- 0 376 064
- US-A- 3 585 149
- US-A- 5 158 986
- US-B2- 6 582 509

## Description

The present invention relates to a starch-based pigment, according to the preamble of Claim 1.

The present invention also relates to a method according to the preamble of Claim 2, and to use according to Claim 9.

The printing paper qualities and coated cardboards used today comprise considerable amounts of inorganic minerals, either as fillers or as coating pigments. These cause problems in recycling of fibre, in paper burning and in composting. The minerals also increase the weight of the paper product considerably, which is very significant in the production of for example printable packing materials.

Synthetic organic pigments are known, too. Usually they have good optical properties, which are based on their ability to scatter visible light. However, a disadvantage associated with known synthetic plastic pigments is that alone they are not suitable as coating or filler pigments for paper, instead they are usually used as doped in mineral pigments.

In patent literature, it is also known that small-sized starch granules are used, either as such or chemically modified, as fillers or for coatings of paper. Manufacturing of starch particles is described in the following patent specifications:
US Patent Specification No. 6,582,509 presents a method in which an organic pigment is prepared by swelling starch granules to increase their volume (2-4 times the original) and plasticity, yet such that the granular structure is preserved. The swelling takes place in water, below the gelatinizing temperature. The volume and the shape stability of the granules are increased by cross-linking. Their surface can be made hydrophobic, too. Gas bubbles or cavities which have a light scattering property are formed inside the granules. The bubbles are generated by evaporating water or a solvent, or by releasing absorbed gas, or by using solvents to displace absorbed water. The dimensions of the cavities in the swelled and stabilized granules are 0.1-5 µm.

Known pigments have the same granule shape as does starch, which does not give the products a good light scattering ability.

The published EP Application No. 1254939 describes a method of producing biopolymer-based nanoparticles by extruding a plasticized biopolymer, such as starch, in the presence of a crosslinking chemical. The glue is prepared by reactive extrusion from starch, glycerol and glyoxal in the presence of water, and the result is a dispersion in water. The sizes of the nanoparticles are < 1000 nm (50-250), and preferably the amylopectin percentage of the starch is high. The latex is used as a glue in the production of corrugated cardboard.

The published International Application No. WO 00/69916 presents nanoparticles of biopolymers. The average particle size of these nanoparticles is < 400 nm. The biopolymer is either a starch, a starch derivative or a polymer blend containing at least 50 % starch. The cross-linking is achieved by using dialdehydes or polyaldehydes, such as glyoxal. In the processing, a plasticator, such as glycerol, is present. The dispersion was prepared from granulate according to the examples, by grinding it and screening out particles bigger than 150 µm, and mixing the powder into water. A homogeneous, transparent light brown dispersion was formed following a viscose gel phase. A disadvantage associated with the known technology is that the dispersion forms a transparent film when drying. Consequently, known nanoparticles are not suitable as coating pigments or fillers for paper or cardboard, and their use in this way is not mentioned in the reference publication, either.

US Patent Specification No. 6,562,459 presents the preparation of round microparticles which consist totally or partly of at least one polysaccharide, insoluble in water. The polysaccharide is dissolved in an organic solvent and precipitated, possibly cooled, and the microparticles are separated. These microparticles are used as fillers in polymers, in the separation of materials and in diagnostic tests. There is no reference to pigment use or applications for paper. Amylose-enriched starch or linear poly(1.4-alpha-D-glucan) is used in the preparation. Among others, glycogen and amylopectin are blended into straight-chain polyglucan. In one known solution, the water insolubility of amylose/amylose-rich starch is utilized and, consequently, it was restricted to the use of straight-chain starch. The solvent used, dimethylsulphoxide, is a toxic chemical and being a material which boils at a high temperature, it is difficult to remove from the product, which limits the usability of the product.

FI Patent Specification No. 98943 presents a method of improving the properties of paper or cardboard, and in particular it relates to a method in which the surface of paper or cardboard is treated with a compound which comprises a binding agent and a pigment component. Part of the pigment is formed of an aqueous phase-polymerization product of polymerized monomers and modified starch. In this method, vinyl monomers are polymerized in the presence of starch. In the reaction, monomeric compounds are grafted into the starch and the product is used to partly replace mineral pigments in the coating paste.

The grafting process is complicated and the pigment obtained is a mixture of natural substance and synthetic polymer. This limits the recycling and the biodegradation of the pigment.

The purpose of the present invention is to eliminate the disadvantages associated with the known technology and to generate a completely new pigment or filler product, one which is based on starch.

The present invention is based on the idea that the required light scattering ability of pigment and, correspondingly, of filler can, in starch-based initial materials, be generated using a solution which is completely different from the known technology in which solid and rigid pigment particles are produced. According to this solution, the initial material is treated in order to build a stiff foam, which comprises pores (micro capsules) of a suitable size. A stable foam such as this can be generated for example by dispersing air into aqueous solutions of starch derivatives, or by the foaming of starch derivatives in supercritical gas.

The foaming of polymer materials is well known *per se.* Air or some other gas can be used in the foaming. In patent literature, methods of foaming polymers using supercritical carbon dioxide are known, too.

Thus, US Patent Specification No. 5,158,986 presents a way of preparing closed-cell, microporous material from thermoplastic polymers by treating them with pressurized carbon dioxide in supercritical condition, and letting the pressure drop rapidly after that. In the method described, PVC, polyethylene-terephtalate or polyethylene can be used as the foamed raw material. In the method described, the foaming time varies from 20 seconds to 2 minutes, and the average pore sizes are in the range of 0.1-2.0 micrometres.

Published EP Patent Application No. 376064 describes the foaming of polymers using carbon dioxide, at elevated pressure and temperature. The method is suitable for plastics.

Published International Patent Application No. WO 91/09079 also describes the preparation of porous materials from synthetic, biodegradable polymers by treating them with supercritical carbon dioxide, and subsequently letting the pressure of the carbon dioxide drop rapidly. With this method it is possible to prepare foams from polyactides, polyglycolids and copolymers of them. The pressure reduction time described in the patent application is 10 seconds.

According to JP Patent Application 2003261707, foamed LDPE insulant, for example for insulating electrically conductive materials, can be prepared from thermoplastic polymer powders or polymer particles using supercritical carbon dioxide treatment (80 bar, 40 °C, and 30 minutes) and then extruding it.

Moreover, US Patent Specification No. 6,558,607 describes the foaming of polyolefin using a solution in supercritical condition, leading to a material having an open pore structure, and which is suitable for several different purposes, among others, in the field of separation techniques, medicine and the textile industry.

In all the publications mentioned above, thermoplastic materials have been foamed. FI Patent Specification No. 100803 describes the use of supercritical carbon dioxide for the foaming of cellulose derivatives, which are insoluble in water, in which case the cellulose derivative, in the form of film, fibre or corresponding piece of solid material is contacted with high-pressure carbon dioxide. The method generates cellulose derivative fibres which are hollow or very porous inside.

In the above mentioned reference publications, there is no mention of any use of the foamed products to be produced for example as pigments or filler materials for paper or cardboard. However, the present invention demonstrates that the starch foams/micro capsules are very useful as paper pigments and especially as fillers, which means that a paper or cardboard that is completely free of mineral particles and has good optical properties can be produced. Used as a filler, the material also gives paper or cardboard good mechanical properties, because starch and starch derivatives are easily fastened to fibres.

More specifically, the product according to the present invention is characterized by what is stated in the characterizing part of Claim 1. The method according to the present invention is, in turn, characterized by what is stated in the characterizing part of Claim 2. Considerable advantages can be achieved with the present invention. Thus, as stated above, according to the invention it is possible to prepare by processing from starch esters or starch ethers or mixtures thereof microporous foam which can be stabilized in the form of micro capsules. By optimizing the inner diameter and the thickness of the wall of the micro capsules, the light scattering ability of the material is maximized, which means that the structure has good opacity properties (generally over 80 %, especially over 85 %). Characteristic of the micro capsule structure is also that the strength properties are good considering its mass. In addition, because the material has a microporous structure it has good absorption properties, which are essential for the application.

The material produced can be used as a filler for paper or a coating for paper instead of mineral filler and coating pigments in applications where the grammage of the paper is desired to be low, or for paper that is desired to be totally recyclable (i.e. burnable without any significant formation of ash).

The invention can be used to substitute mineral filler or coating materials of paper with renewable materials of organic origin without the properties which are important for the end use of the paper being weakened. By replacing the mineral filler or coating pigments, a paper of a lower grammage can be produced and, consequently, the costs of logistics are reduced and a larger printing surface is obtained with the same mass. The filler or coating materials of organic origin also remove the problems encountered during the final treatment of the ash generated in the burning and/or treatment of the deinking slurry.

By combining starch derivatives or by using multifunctional products, it is possible to vary the properties of starch gels/starch foams. Among others, a formulation comprising hydroxyalkyl starch and starch alkenyl succinate has proved to be a good combination.

In the following, the invention will be examined with the help of a detailed description with references to accompanying drawings.

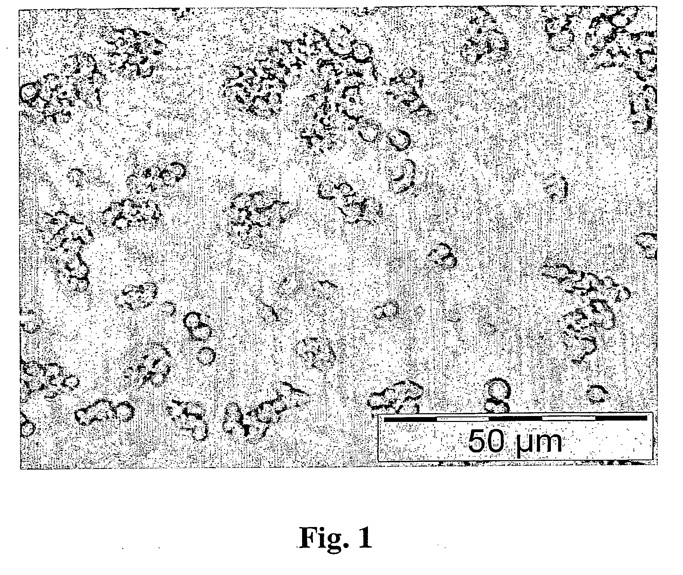

Figure 1 shows an SEM image of micro bubbles prepared with a dispergator (initial material LN 100).

A porous starch-based material comprising micro bubbles/micro capsules is prepared in the present invention. It can be specified that the micro bubbles are mainly gas-filled, small, unstable spheres in a solution. The micro bubble is held together by a thin liquid wall, a film. The micro capsules are stabilized micro bubbles. They are particles the average diameter of which is approximately 0.1-10 µm, and which comprise a core and a capsule wall which is usually solid. The core is gas-filled (hollow). Generally, the total porosity of the materials is 10-85 % by volume, preferably approximately 30-80 % by volume, in particular 40-75 % by volume.

The products are stable. It is known that the stability of foams, particle dispersions and emulsions often depends on several factors, but an important factor is the stability of the films between the phases (life span). The stabilization of these films requires that the liquid comprises some organic or inorganic material. Clean liquids as such do not among others build up a foam. The life span of the films of the micro bubbles, i.e. the gas-liquid-interface, is shortened mainly by the surface tension forces, which increase the pressure inside the bubble. As the pressure rises, it reaches a point where the structure of the bubble breaks down. The bubbles can be stabilized by different methods of which can be mentioned crosslinking using linkable surface-active agents, which results in decreasing surface tension. For example anionic, cationic or non-ionic amphiphilic chemicals (called collecting agents, for instance amines, xanthates, sulphates) are used as surface-active agents. The result is a hard-crusted micro capsule with a crust comprising organic material.

In this case, "stable" foam means that the foam and its bubble do not break down significantly during storage (for example over a period of 1-10 weeks), nor in the end product, rather the structure essentially maintains its porosity in the paper or the cardboard.

The concentration of the surface-active agent must be clearly higher than the critical micelle formation concentration (c.m.c.).

The present invention comprises the following method of producing micro bubbles.

A derivative prepared from starch, such as ester or ether, is contacted with high-pressure carbon dioxide. The pressure and the temperature of the carbon dioxide, and the period during which the starch derivatives are exposed to the carbon dioxide are selected according to the composition of the starch derivative, the measure proportions and the desired end result in such a manner that the high-pressure carbon dioxide penetrates into the solid starch derivative, which is swelled because of the carbon dioxide. If necessary, enhancing agents, such as small molecular alcohols, organic acids or esters, can be added to the carbon dioxide. In the method according to the present invention the pressure on the starch derivative, which was swelled in the high-pressure carbon dioxide, is lowered rapidly thereby producing a porous material following decompression. The decompression can be effected for instance by releasing the carbon dioxide contacting the swelled starch derivative. The decompression rate and the end pressure of the carbon dioxide are chosen in order to produce the desired microporous starch material.

The foaming of a starch derivative with a material comprising mainly carbon dioxide, at an elevated pressure and temperature .

In this method, a starch derivative, such as starch ester or starch ether is brought into contact with a material comprising mainly carbon dioxide and, after that, the pressure is allowed to fall rapidly, so that after the decompression microporous starch ester or starch ether is generated with an average pore diameter of less than 50 micrometres. It should be pointed out that in this case, too, stable foams are generated in which a substantial part of the bubbles (at least 20 %) are, at most, 10 micrometres. Preferably, the average bubble size is less than 10 micrometres, typically approximately 0.1-5 micrometres.

The pressure is usually 100-310 bar and the temperature 50-100 °C. Small molecular alcohol or ester, the quantity of which is approximately 1-15 % by weight, is added to the carbon dioxide contacting the starch derivative. The pressure is reduced to an essentially lower pressure within 0.08-7 seconds.

In this alternative, the DS of the starch derivative is most suitably at least 0.5, preferably at least 1.0.

Initial materials of starch are:
Anionic derivatives (carboxy-methyl starch, starch succinate) or cationic derivatives (for instance cationic starch esters which are self-dispersing) or crosslinking derivatives (UV-hardened double-bonded derivatives, acrylates) can be made from starch.

Depending on the situation, it is possible to use mixtures of different starch derivatives. Consequently, by combining starch derivatives or by using multifunctional products, the properties of starch gels/starch foams can be varied. Among others, a formulation comprising hydroxyalkyl starch and starch alkenyl succinate has proven to be a good combination.

Typically, the starch derivative is thus a starch ester, starch ether, mixed starch ester/ether or grafted starch prepared from native starch, hydrolyzed starch, oxidized starch, crosslinked starch or gelatinized starch. The starch used, in turn, can be based on any natural starch, the amylose percentage of which is 0-100 % and the amylopectin percentage is 100-0 %. Consequently, the starch can be sourced from barley, potato, wheat, oats, pea, corn, tapioca, sago, rice or similar tuber vegetables or cereal crops.

More preferebly, the starch derivative used in the present invention is based on products prepared by oxidizing, hydrolyzing, crosslinking, cationizing, grafting, etherifying or esterifying from the natural starches mentioned above.

According to a preferable embodiment the starch component is hydroxyalkylated starch or an ester of it. In this case, more preferable are hydroxypropyl starches, the molar degree of substitution of which is at most 1.4, preferably at most 2 and especially at most 1, and hydroxypropyl starch esters, the molar degree of substitution of which is at most 1.4, preferably at most 1 and more preferably 0.1-0.8, and the degree of substitution is at least 2, preferably 2.5-3.

According to another form of application, starch alkenyl succinate is used, one which has a linear or branched alkenyl group, comprising typically 3-24 carbon atoms (for instance an octenyl group).

A starch-based component is used, one which is derived from an ester formed both of starch and one or several aliphatic C₂₋₂₄-carboxylic acids. In this case, the carboxyl acid component of such an ester can be derived from a lower alcanoic acid, such as acetic acid, propionic acid or butyric acid, or a mixture of them. However, the carboxyl acid component can also come from saturated or unsaturated fatty acids found in nature. Palmitinic acid, stearic acid, oleic acid, linolic acid and mixtures of them are typical examples. Also, an ester can consist of both long chain and short chain carboxyl-acid components. A mixed ester of acetate and stearate is a typical example. According to a known method, not only acids but also corresponding acid anhydrides and acid chlorides, and other corresponding reactive acid derivatives, can be used to form an ester, too.

Production of fatty acid esters of starch is carried out, for example, as described in the professional publications: Wolff, I.A., Olds, D.W. and Hilbert, G.E., The acylation of Corn Starch, Amylose and Amylopectin, J. Amer. Chem. Soc. 73 (1952) 346-349 or Gros, A.T. and Feuge, R.O., Properties of Fatty Acid Esters of Amylose, J. Amer. Oil Chemists' Soc 39 (1962) 19 - 24.

A method described in FI Patent No. 107386 in which the esterifying is performed under pressure conditions is one example of a suitable production process.

According to another preferable embodiment, the starch component is an esterified starch, most preferably starch acetate, the molar degree of substitution of which is 0.5-3, preferably 1.5-3 and most suitably 2-3.

Furthermore, transglycosylation products can be prepared from the starch derivatives mentioned above by bringing the derivative to react in acidic conditions with an alcanol which comprises 1-5 hydroxyl groups, and by recovering the reaction product or by subjecting it to further processing, for instance in a new reaction step or in a mixing step.

This method makes possible the preparation of a microporous starch derivative material, for instance a filler for paper, etc., not only at affordable cost but also by means of a simple process.

By controlling the foaming conditions, i.e. the pressure, the temperature and quantity and quality of the enhancing agent, as well as the degree of substitution of the foamed substance, it is possible to affect the total porosity of the material, the pore size and the pore quality (open/closed).

Modelling of the light scattering shows that the pore size of the foamed material is generally approximately 0.1-10 micrometres (µm), preferably less than 1µm, even 100-200 nm, and the total porosity is 75 %, when the diameter of the individual particle is less than 5 µm, or in the case of the smallest pore size, less than 1 µm.

The areas of application of the present products are papers and cardboards, paints, plastics, rubbers, cosmetics, hygiene products, and detergents and other chemical products.

In the following, the invention will be examined in more detail, with some accompanying examples of how it is applied.

### Examples:

### Example 1

### Foaming with a dispergator (formation of emulsion) - general description of method steps:

The preparation of bubbles using an emulsion technique, which involved vigorous mixing, was studied. A dispergator with high mixing speeds (IKA, Ultra Turrax^{®} T 25 Basic) was used for generating the emulsion.

A starch which is as soluble as possible was dissolved in water to either a 10% or a 15 % solution. The starches used are LN 100, LM 100, C*em Cap Cerestar, dispersion (9 DIP-2103), TL-starch, Hylon-7 corn starch and different blends of them.
- LM100: A hydroxy propyl starch which is soluble in cold water, prepared from an amylose-enriched starch (Hylon VII). Prepared using a method according to FI Patent No. 107930
- C*EmCap: Starch octenyl succinate (Cerestar)
- LN100: Hydroxy-propylated potato starch which is soluble in cold water. Prepared using a method according to patent FI 107930
- 9DIP-2103: A water dispersion prepared from acetylated starch derivative using a method according to patent application FI 20021730
- TL-starch: A starch composition, soluble in water, according to patent application WO/068884

LN 100 is an effective thickener and geller.

A quantity, smaller than the volume of the water solution, of solvent or oil, which is not soluble in water, as well as ethanol or isopropanol in a suitable proportion was added to the mixture. Another option is that only water was used. Solvents tested were: mineral spirit, turpentine, LIAV, hexane, chloroform, rapeseed oil, linseed oil. Subsequently, surface-active agents (collecting agent and foaming agent) as well as a crosslinker were added to the mixture. The collecting agents used were mainly cationic amines: dodecyl amine hydrochloride, octadecyl amine hydrochloride, di (C12-C18) alkyl-dimethylammonium chloride (trade name A18). Methyl isobutyl carbinol (abbreviation used MIBC) and polypropylene glycol methyl ether (trade name Dow Froth) were used as foaming agents. Mainly glyoxal but also Cymel-resin (Cytec Industries Inc.) was used as crosslinkers and stabilizers. Usually, white and stable foam with micro bubbles has been generated.

The mixture has been stirred with a dispergator for 5-15 minutes (generally approximately 1-60 minutes) depending on the case, using a speed of rotation of 11 000-22 000 rpm (generally approximately 5 000-30 000 rpm). Before the mixing, the mixture was generally greyish, but generally it started to turn to a white or light stiffish foam immediately after the mixing started. The foams generated have usually been analyzed with a conventional light microscope, a laser-particle size analyser and also with a SEM-microscope. At its best, the average diameter of the generated micro bubbles have so far been 1.2 micrometres, in which case 95 % of the bubbles were 1.7 micrometres. The bubbles were hereby prepared using a mixture composition of LN 100, A18, glyoxal, MIBC, mineral spirit and ethanol (in proportion 1:4).

The method can be used without solvents, too, in which case the preparation takes place in the water phase. Accordingly, the initial material used was a mixture of LN 100 and a dispersion (9 DIP-2103) with a high percentage of solids, mixed in water. The collector used was A18 and, in addition, MIBC and glyoxal were used. As a result, a stable foam with micro bubbles was generated.

### Example 2

### Preparation of the foam according to Figure 1, using a dispergator:

80 g of a 15 % water solution of LN100 starch and 20 g of 9DIP-2103 dispersion were weighed out in a decanter. 50 ml of Millipore water, 0.1 g of A18 collector chemical, 2 ml of methyl isobutyl carbinol foaming agent and 0.2 ml of glyoxal were added to the solution. The greyish mixture was mixed with a spatula, after which it was stirred with a dispergator. The mixing time in the experiment was 5 minutes and the mixing speed 22 000 rpm. The product generated was a white, uniform foam (the diameter of the smallest bubbles was 1 micrometre) (see Figure 1).

### Example 3

### Preparation of micro bubbles using the electric flotation method

### Experimental arrangements:

The electric flotation method, too, has been tested for the production of starch-based micro bubbles. Tests were carried out with a flotation cell at a laboratory scale (400 ml) designed by the Geological Survey of Finland. Sodium chloride and sodium sulphate were used as electrolytes in the tests. The starches tested were potato starch (Merck), Hylon-7 corn starch and hydroxy propylated potato starch LN 100. Surface-active collector chemicals (sodium lauryl sulphate and amine collector agent Raiflot) as well as a foaming agent (MIBC: methyl isobutyl carbinol) were used as surface tension reducers and stabilizers. The starch was dissolved in water and slightly heated (generally 30-35 °C) to intensify the dissolution. The insoluble part was generally filtered out. After that, the other reagents were added into the solution. An electric voltage (∼10 V, current 1-2 A) was passed through the flotation cell and the foaming was started. Gas-filled micro bubbles rose to form a foam at the top part of the cell, from which it could be continuously skimmed off into a separate vessel. Generally, white foam was generated for a period of 5-20 minutes.

### Preparation example:

Hylon-7 corn starch (10g) was mixed in 370 ml of Millipore-water and the mixture was heated at 30 °C for 5 minutes. When heated, the starch was gelled to the extent that the filtration could not succeed. A mixture comprising small amounts of solid matter was put in the electric flotation cell, and 8 ml of an electrolyte (NaCl, 200 g/l), 0.8 g of sodium lauryl sulphate used as a collector chemical together with 4 ml of MIBC foaming agent were added into the cell. An electric voltage (∼10 V) was passed through the cell and the foaming was started. Light foam was generated and rose up to the surface of the cell, from where it flowed along the side pipe of the cell to another vessel. After ten minutes, the test was stopped because the voltage started to decrease and hardly any foam was generated anymore. Big foam bubbles as well as small bubbles could be seen in the foam. The sample was dried at room temperature.

### Examples 4-12

### Micro bubbles prepared in supercritical carbon dioxide

### Example 4

Starch acetate powder (5.5 g), with a degree of acetylation of 2.8 was loaded into the cylinder, both ends of which were plugged with steel lattices. The sample was loaded so that it was isolated from both lattices by a wadding layer. The cylinder was placed in a heatable high pressure reactor with a volume of 50 ml. This reactor was equipped with a ball valve. The pressure inside the reactor was then raised using carbon dioxide to 230 bar and the temperature was raised to 90 °C. The temperature was measured at the lid inside the reactor vessel. At the end of the experiment, the device was discharged, resulting in the bulk of the carbon dioxide being released in approximately 100 milliseconds. The treatment time was 150 minutes. During the exposure the inner temperature of the reactor was approximately 90 °C. By using an electric sock the outer temperature of the vessel was kept at approximately +90...95 °C. The ethanol (10 % by weight) in the carbon dioxide was dosed by impregnating a calculated amount of it into a wad in a second, heated cartridge, through which CO₂ was conducted into the reactor. After the dosage, the wad was totally dry.

After examination with an electron microscope it was discovered that, using the treatment, open pores with a diameter of approximately 10 µm could be generated in the starch derivative material.

### Example 5 (reference example)

5.8 g of starch acetate with a degree of acetylation of 2.8 were treated using an experimental arrangement according to Example 4. The treatment temperature was 90 °C, the pressure 220 bar and the ethanol percentage 0. The treatment time was 135 minutes. The treatment did not generate any pore structure in the material.

### Example 6

5.7 g of starch acetate with a degree of acetylation of 1.7 were treated using an experimental arrangement according to Example 4. The treatment temperature was 83 °C, the pressure 220 bar and the ethanol percentage 5 %. The treatment time was 125 minutes. Using the treatment it was possible to generate a structure, the outer surface of which was closed, and which comprised 1-2 µm sized pores homogeneously throughout the structure.

### Example 7 (reference example)

5.4 g of starch acetate with a degree of acetylation of 1.7 were treated using an experimental arrangement according to Example 4. The treatment temperature was 82 °C, the pressure 220 bar and the ethanol percentage 0. The treatment time was 125 minutes. The treatment did not generate any pores in the material.

### Example 8 (reference example)

6.0 g of starch acetate with a degree of acetylation of 0.05 were treated using an experimental arrangement according to Example 4. The treatment temperature was 81 °C, the pressure 222 bar and the ethanol percentage 5 %. The treatment time was 135 minutes. No pores were formed in the material.

### Example 9 (reference example)

5.4 g of starch acetate with a degree of acetylation of 0.05 were treated using an experimental arrangement according to Example 4. The treatment temperature was 84 °C, the pressure 220 bar and the ethanol percentage 0. The treatment time was 135 minutes. No pores were formed in the material.

### Example 10

5.7 g of starch acetate with a degree of acetylation of 2.8 were treated using an experimental arrangement according to Example 4. The treatment temperature was 81 °C, the pressure 220 bar and the ethanol percentage 5 %. The treatment time was 125 minutes. As a result of the treatment, a porous material was generated comprising open pores of two sizes: 20 µm and 2-3 µm.

### Example 11

5.6 g of starch acetate with a degree of acetylation of 2.8 were treated using an experimental arrangement according to Example 4. The treatment temperature was 81 °C, the pressure 220 bar and the ethanol percentage 0. The treatment time was 130 minutes. As a result of the treatment, a material with a closed surface was generated, one comprising a few solid-structure pores sized 1-50 µm.

### Example 12

5.5 g of starch acetate with a degree of acetylation of 0.8 were treated using an experimental arrangement according to Example 4. The treatment temperature was 81 °C, the pressure 220 bar and the ethanol percentage 5 %. The treatment time was 60 minutes. As a result of the treatment, a porous material was generated comprising open pores of two sizes: 40 µm and 3-4 µm.

## Claims

1. A porous starch-based pigment or filler product, **characterized in that** it comprises a stable foam, which contains foam bubbles, the average size of which is less than approximately 10 micrometres, and wherein the starch-based material is a starch derivative selected from starch esters and starch ethers and mixtures thereof.

2. A method of manufacturing a product according to Claim 1, **characterized in that** a solid starch derivative having a degree of substitution of at least 0.5 is contacted with high-pressure carbon dioxide in conditions where the high-pressure carbon dioxide penetrates into the starch derivative, which swells because of the effect of the carbon dioxide, after which the pressure on the starch derivative, which was swelled in the carbon dioxide, is lowered rapidly thereby producing a porous material following decompression.

3. A method according to Claim 2, **characterized in that** a solid starch ester or starch ether, with a degree of substitution in the range of 0.5-3.0 mol/mol, preferably at least 1.0, is contacted with a material which comprises mainly carbon dioxide at an elevated pressure and temperature, after which the pressure of the material which was contacting the starch ester or starch ether and which comprises mainly carbon dioxide is reduced rapidly so that a microporous starch ester or starch ether is achieved after the reduction of the pressure.

4. A method according to Claim 3, **characterized in that** a starch ester or a starch ether is contacted with a material which comprises mainly carbon dioxide at a pressure of 100-310 bar and at a temperature of 50-100 ° C.

5. A method according to Claim 3 or 4, **characterized in that** a starch ester or a starch ether is contacted with carbon dioxide to which small molecular alcohol or ester has been added.

6. A method according to any of Claims 3-5, **characterized in that** the carbon dioxide comprises 1-15 % per weight small molecular alcohol or ester.

7. A method according to any of Claims 3-6, **characterized in that** the pressure on the material contacting the starch ester or the starch ether and which comprises mainly carbon dioxide is reduced to an essentially lower pressure within 0.08-7 seconds.

8. A method according to any of Claims 3-7, **characterized in that** in order to modify the properties of the starch gels/starch foams, an initial material is used which comprises hydroxyalkyl starch or starch alkenyl succinate.

9. Use of a starch-based product according to Claim 1 as a pigment and/or filler for paper and cardboard.

## Patentansprüche

1. Ein poröses stärkebasiertes Pigment- oder Füllstoffprodukt, **dadurch gekennzeichnet, dass** es einen stabilen Schaum umfasst, welcher Schaumblasen, deren mittlere Größe kleiner als ungefähr 10 Mikrometer ist, enthält und wobei das stärkebasierte Material ein Stärkederivat, ausgewählt aus Stärkeestern und Stärkeether und Gemischen davon, ist.

2. Ein Verfahren zum Herstellen eines Produkts gemäß Anspruch 1, **dadurch gekennzeichnet, dass** ein festes Stärkederivat, das einen Substitutionsgrad von mindestens 0,5 aufweist, in Kontakt mit Hochdruck-Kohlendioxid gebracht wird unter Bedingungen, bei denen das Hochdruck-Kohlendioxid in das Stärkederivat eindringt, welches durch den Effekt des Kohlendioxids quellt, wonach der Druck auf das Stärkederivat, welches in dem Kohlendioxid gequellt wurde, schnell reduziert wird, um dadurch ein poröses Material nach der Druckentlastung zu bilden.

3. Ein Verfahren gemäß Anspruch 2, **dadurch gekennzeichnet, dass** ein fester Stärkeester oder Stärkeether mit einem Substitutionsgrad im Bereich von 0,5 bis 3,0 mol/mol, bevorzugt mindestens 1,0, bei einem erhöhten Druck und einer erhöhten Temperatur mit einem Material in Kontakt gebracht wird, welches hauptsächlich Kohlendioxid umfasst, wonach der Druck des Materials, welches mit dem Stärkeester oder Stärkeether in Kontakt war und welches hauptsächlich Kohlendioxid umfasst, schnell reduziert wird, so dass ein mikroporöser Stärkeester oder Stärkeether nach der Reduzierung des Drucks erhalten wird.

4. Ein Verfahren gemäß Anspruch 3, **dadurch gekennzeichnet, dass** ein Stärkeester oder ein Stärkeether bei einem Druck von 100 bis 310 bar und einer Temperatur von 50 bis 100 °C mit einem Material, welches hauptsächlich Kohlendioxid umfasst, in Kontakt gebracht wird.

5. Ein Verfahren gemäß Anspruch 3 oder 4, **dadurch gekennzeichnet, dass** ein Stärkeester oder Stärkeether mit Kohlendioxid, zu welchem niedermolekularer Alkohol oder Ester hinzugegeben wurde, in Kontakt gebracht wird.

6. Ein Verfahren gemäß einem der Ansprüche 3 bis 5, **dadurch gekennzeichnet, dass** das Kohlendioxid 1 bis 15 Gewichts-% an niedermolekularem Alkohol oder Ester umfasst.

7. Ein Verfahren gemäß einem der Ansprüche 3 bis 6, **dadurch gekennzeichnet, dass** der Druck auf das Material, das in Kont mit dem Stärkeester oder dem Stärkeether ist und welches hauptsächlich Kohlendioxid umfasst, auf einen wesentlich niedrigeren Druck innerhalb von 0,08 bis 7 Sekunden reduziert wird.

8. Ein Verfahren gemäß einem der Ansprüche 3 bis 7, **dadurch gekennzeichnet, dass**, um die Eigenschaften der Stärkegele/Stärkeschäume zu verändern, ein Ausgangsmaterial verwendet wird, welches Hydroxyalkylstärke oder Stärkealkenylsuccinat umfasst.

9. Verwendung eines stärkebasierten Produkts gemäß Anspruch 1 als ein Pigment und/oder Füllstoff für Papier und Pappe.

## Revendications

1. Produit de charge ou de pigment poreux à base d'amidon, **caractérisé en ce qu'**il comprend une mousse stable, qui contient des bulles de mousse, dont la taille moyenne est inférieure à environ 10 micromètres, et dans lequel le matériau à base d'amidon est un dérivé d'amidon choisi parmi les esters et les éthers d'amidon et leurs mélanges.

2. Procédé de fabrication d'un produit selon la revendication 1, **caractérisé en ce qu'**un dérivé d'amidon solide ayant un degré de substitution d'au moins 0,5 est mis en contact avec du dioxyde de carbone à haute pression dans des conditions où le dioxyde de carbone à haute pression pénètre dans le dérivé d'amidon, qui gonfle sous l'effet du dioxyde de carbone, après quoi la pression sur le dérivé d'amidon, qui a été gonflé dans le dioxyde de carbone, est rapidement abaissée produisant ainsi un matériau poreux à la suite de la décompression.

3. Procédé selon la revendication 2, **caractérisé en ce qu'**un ester d'amidon ou éther d'amidon solide, avec un degré de substitution dans la plage de 0,5 à 3,0 mol/mol, de préférence d'au moins 1,0 est mis en contact avec un matériau qui comprend principalement du dioxyde de carbone à une pression et une température élevées, après quoi la pression du matériau qui a été mis en contact avec l'ester d'amidon ou l'éther d'amidon et qui comprend principalement du dioxyde de carbone est rapidement réduite de sorte qu'un ester d'amidon ou un éther d'amidon microporeux est réalisé après réduction de la pression.

4. Procédé selon la revendication 3, **caractérisé en ce qu'**un ester ou un éther d'amidon est mis en contact avec un matériau qui comprend principalement du dioxyde de carbone à une pression de 100 à 310 bar et à une température de 50 à 100 °C.

5. Procédé selon la revendication 3 ou 4, **caractérisé en ce qu'**un ester d'amidon ou un éther d'amidon est mis en contact avec du dioxyde de carbone auquel un alcool ou ester à petite molécule a été ajouté.

6. Procédé selon l'une quelconque des revendications 3 à 5, **caractérisé en ce que** le dioxyde de carbone comprend 1 à 15 % en poids d'alcool ou ester à petite molécule.

7. Procédé selon l'une quelconque des revendications 3 à 6, **caractérisé en ce que** la pression sur le matériau en contact avec l'ester d'amidon ou l'éther d'amidon et qui comprend principalement du dioxyde de carbone est réduite à une pression essentiellement plus basse en 0,08 à 7 secondes.

8. Procédé selon l'une quelconque des revendications 3 à 7, **caractérisé en ce qu'**afin de modifier les propriétés des gels d'amidon / mousses d'amidon, un matériau initial est utilisé qui comprend de l'hydroxyalkyl amidon ou du succinate d'alcényl amidon.

9. Utilisation d'un produit à base d'amidon selon la revendication 1 en tant que pigment et/ou charge pour du papier et du carton.
